# EUROPEAN PATENT SPECIFICATION

(11) **EP 2 276 030 B1**
(45) Date of publication and mention of the grant of the patent: **04.07.2012**
(21) Application number: 09170136.7
(22) Date of filing: 11.09.2009
(51) Int. Cl.: G11B 23/40, G11B 7/24, G11B 7/007, B65C 9/26

(54) **Optical discs with uniform appearance**
Optische Scheiben mit einheitlicher Erscheinung
Disques optiques avec apparence uniforme

(30) Priority: 01.07.2009 IN CH15622009
(43) Date of publication of application: 19.01.2011
(73) Proprietor: Moser Baer India Ltd., New Delhi 110 020 (IN)
(72) Inventor: Juneja, Gurpreet Singh, Chennai (IN); Raman, Rajagopal S., Chennai (IN); Jindal, Rajeev, Chennai (IN); Bhargava, Anil, Chennai (IN)
(74) Representative: Beck, Michael Rudolf

(56) References cited:
- EP-A1- 1 950 744
- US-A- 5 946 286
- US-A1- 2002 126 617
- US-A1- 2005 180 305
- US-A1- 2007 002 721

## Description

The present invention relates, in general, to optical discs. More particularly, the present invention relates to an optical disc with uniform appearance.

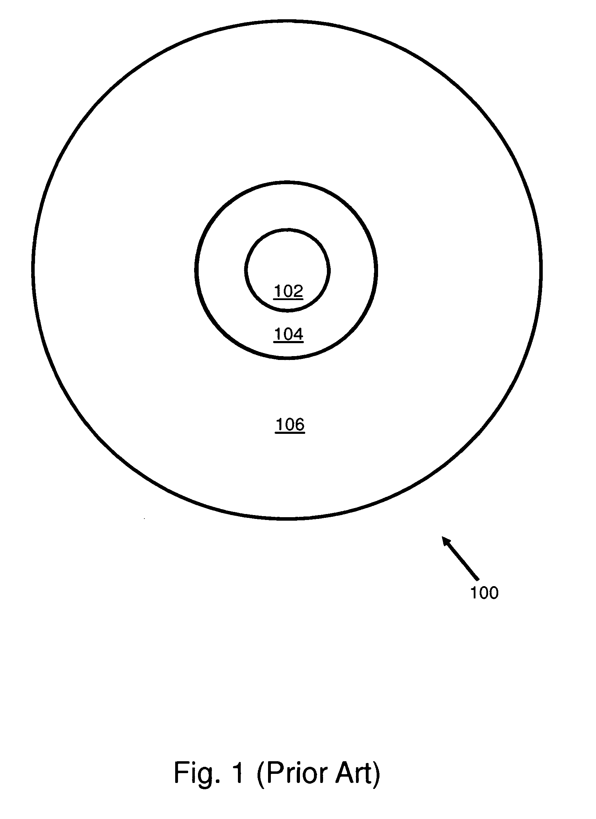

Optical discs typically have a central punch area, a hub area and a data area. The hub area is generally transparent, and is made of plastic. On the other hand, the data area has several layers that enable recording and/or reproducing data, and therefore, is opaque. FIG. 1 (Prior Art) illustrates an optical disc 100. Optical disc 100 includes a punch area 102, a hub area 104, and a data area 106. With reference to FIG. 1, hub area 104 is transparent, while data area 106 is opaque. This gives optical disc 100 a non-uniform appearance across hub area 104 and data area 106. Consider, for example, that optical disc 100 has a printable surface that spans hub area 104 and data area 106. When an image is printed onto the printable surface, the image appears non-uniform across hub area 104 and data area 106. This causes various hindrances in operational and marketing aspects, for example, related to utility and acceptability.

Various attempts have been made in the past, to overcome the aforementioned problems. For example, wide sputtering of optical discs has been attempted. However, these attempts have failed to achieve uniformity in the appearance of optical discs so formed.

Other techniques are also known, for example, in US patent application published as 2002126617 and US granted patent 5946286, optical discs capable of having optically viewable images applied thereon have been disclosed.

In US application published as 2002126617, an optical data storage disc according to the preamble of claim 1 is provided. According to the invention disclosed in this application, the data storage disc is provided with a mirror area and an information area having increasing radiuses. The mirror area here is provided with a data storage layer but typically does not include any information embedded therein in comparison to the information area, which can comprise data. Further, the invention provides a method of applying optically viewable image / pattern on the optical disc by burning an image / pattern using a laser just like writing data. However, this does not solve the problem of the uneven appearance of the optical discs resultantly causing an uneven image formation thereon.

In the granted US patent 5946286, a dual layer optical disc is provided, in which optically viewable images are provided by using different heights of lands and pits over a surface area. According to the invention the area where the image is to be applied, a reduced height of lands is provided relative to the height of lands where data is embedded. However, this application also does not provide a solution to providing uniform appearance all over the surface of the optical disc. These solutions enable printing of uniformly viewable images only on a small portion of the optical disc surface and not the entire disc surface.

In light of the foregoing discussion, there is a need for an optical disc that has a uniform appearance, enables uniform appearance of an image printed onto it, and overcomes the above-mentioned hindrances.

### SUMMARY

An object of the present invention is to provide an optical disc with uniform appearance (and manufacturing method and system thereof).

Another object of the present invention is to provide an optical disc that enables uniform appearance of an image printed onto it.

Yet another object of the present invention is to provide an optical disc that overcomes various technical hindrances in operational and marketing aspects, for example, related to utility and acceptability.

Embodiments of the present invention provide an optical disc with uniform appearance. The optical disc includes a punch area at a centre of the optical disc, a hub area surrounding the punch area, and a data area surrounding the hub area. The hub area is formed between a first inner radius and a first outer radius. The data area is formed between a second inner radius and a second outer radius. The second inner radius is greater than the first inner radius, and the second outer radius is greater than the first outer radius. The first inner radius and the first outer radius may, for example, range between 7.5 mm and 16.5 mm. The second inner radius and the second outer radius may, for example, range between 16.5 mm and 65 mm.

The hub area and the data area include grooves and lands formed between a predetermined radius and the second outer radius. The predetermined radius lies at the first inner radius or between the first inner radius and the first outer radius. This enables uniform appearance across an area between the predetermined radius and the second outer radius.

The optical disc includes a printable layer formed between the predetermined radius and the second outer radius, wherein the optical disc has a uniform appearance of an image printed onto the printable layer across the area between the predetermined radius and the second outer radius. The printable layer may, for example, be made of paper, plastic, polyvinyl pyrrolidone (PVP), polyvinyl alcohol (PVOH), polyvinyl acetate (PVA), polymers, synthetic resins, or combinations thereof.

In accordance with an embodiment of the present invention, the optical disc includes one or more dye layers formed over the grooves and lands, a reflective layer formed over the one or more dye layers, and a protective layer formed over the reflective layer. The one or more dye layers may, for example, be made of cyanine, phthalocyanine, azo compounds, formazan, or combinations thereof. The reflective layer may, for example, be made of metals, metallic alloys, metal-containing compounds, or combinations thereof.

As mentioned above, the optical disc so formed enables uniform appearance across the area between the predetermined radius and the second outer radius, and enables uniform appearance of the image printed onto the printable layer. This enhances the utility and acceptability of the optical disc.

### BRIEF DESCRIPTION OF DRAWINGS

Embodiments of the present invention will hereinafter be described in conjunction with the appended drawings provided to illustrate and not to limit the scope of the claims, wherein like designations denote like elements, and in which:
FIG. 1 (Prior Art) illustrates an optical disc;
FIG. 2 illustrates an optical disc, in accordance with an embodiment of the present invention;
FIG. 3 illustrates an optical disc, in accordance with another embodiment of the present invention;
FIG. 4 illustrates various layers of an optical disc, in accordance with an embodiment of the present invention;
FIG. 5 is a sectional view illustrating the various layers of the optical disc, in accordance with an embodiment of the present invention;
FIG. 6 illustrates a system for manufacturing an optical disc, in accordance with an embodiment of the present invention; and
FIG. 7 illustrates a method of manufacturing an optical disc, in accordance with an embodiment of the present invention.

### DETAILED DESCRIPTION

As used in the specification and claims, the singular forms "a", "an" and "the" include plural references unless the context clearly dictates otherwise. For example, the term "an optical disc" may include a plurality of optical discs unless the context clearly dictates otherwise. A term having "-containing" such as "metal-containing" contains a metal but is open to other substances, but need not contain any other substance other than a metal.

According to the present invention an optical disc according to claim 1 with uniform appearance, is provided and a method according to claim 8 for manufacturing an optical disc. In the description of the embodiments of the present invention, numerous specific details are provided, such as examples of components and/or mechanisms, to provide a thorough understanding of embodiments of the present invention. One skilled in the relevant art will recognize, however, that an embodiment of the present invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

### GLOSSARY

Optical disc: An optical disc is for recording and/or reproducing data.
Substrate: A substrate is for providing support to the optical disc.
Punch area: A punch area is a hole through a centre of an optical disc.
Hub area: A hub area is a two-dimensional area surrounding the punch area.
Data area: A data area is a two-dimensional area, surrounding the hub area, on and/or from which data is recorded and/or reproduced.
Grooves and lands: A groove is a three-dimensional recessed region formed on the substrate. Grooves are generally formed in a concentric or spiral manner. A land is a two-dimensional area formed between two adjacent grooves.
Printable layer: A printable layer is for printing an image onto it. The printable layer may also be referred to as a printed material.
Dye layer: A dye layer is for recording data onto it. The dye layer is formed over the grooves and lands on the substrate.
Reflective layer: A reflective layer is formed over the dye layer. A light beam falling on the optical disc is reflected off the reflective layer, and is received by a light detector during recording and/or reproducing of data.
Protective layer: A protective layer is formed over the reflective layer. The protective layer protects underlying layers from external factors, such as scratches and dirt.
Molding unit: A molding unit is for molding a polymeric material to form the substrate. The molding unit is adapted to form grooves and lands over the substrate, as required.
Printable-layer forming unit: A printable-layer forming unit is for forming a printable layer over the substrate.
Dye-layer forming unit: A dye-layer forming unit is for forming one or more dye layers over the grooves and lands.
Reflective-layer forming unit: A reflective-layer forming unit is for forming a reflective layer over the one or more dye layers.
Protective-layer forming unit: A protective-layer forming unit is for forming a protective layer over the reflective layer.
Uniform appearance: A region has a uniform appearance when it has substantially the same intensity of whiteness across the region. The intensity of whiteness may, for example, be measured in terms of the Lab color space.
Lab color space: The Lab color space is a color-opponent space in which component 'L' represents lightness of color, component 'a' represents its position between red/magenta and green, and component 'b' represents its position between yellow and blue. The Lab color space is designed to approximate human vision. Its component 'L' closely matches human perception of lightness.

The optical disc includes a punch area at a centre of the optical disc, a hub area surrounding the punch area, and a data area surrounding the hub area. The hub area is formed between a first inner radius and a first outer radius. The data area is formed between a second inner radius and a second outer radius. The second inner radius is greater than the first inner radius, and the second outer radius is greater than the first outer radius. In accordance with an embodiment of the present invention, the second inner radius is equal to the first outer radius.

Optical discs are available in various types and sizes. Examples of optical discs include, but are not limited to, Compact Discs (CDs), Digital Versatile Discs (DVDs), High-Definition DVDs (HD-DVDs), High-Definition Versatile Discs (HVDs), Blu-ray Discs (BDs), MiniDiscs (MDs), Universal Media Discs (UMDs), and Laser Discs (LDs). The overall radius of optical discs may, for example, range between 30 mm and 65 mm. The first inner radius and the first outer radius may, for example, range between 7.5 mm and 16.5 mm. The second inner radius and the second outer radius may, for example, range between 16.5 mm and 65 mm.

The hub area and the data area include grooves and lands formed between a predetermined radius and the second outer radius. The predetermined radius lies at the first inner radius or between the first inner radius and the first outer radius. This enables uniform appearance across an area between the predetermined radius and the second outer radius.

As mentioned above, a region has a uniform appearance when it has substantially the same intensity of whiteness across the region. The intensity of whiteness may, for example, be measured in terms of the Lab color space, using a modified form of spectrophotometer. An example of such a spectrophotometer is the Gretag-Macbeth spectroscan.

The optical disc includes a printable layer formed between the predetermined radius and the second outer radius, wherein the optical disc has a uniform appearance of an image printed onto the printable layer across the area between the predetermined radius and the second outer radius. The printable layer may, for example, be made of paper, plastic, polyvinyl pyrrolidone (PVP), polyvinyl alcohol (PVOH), polyvinyl acetate (PVA), polymers, synthetic resins, or combinations thereof.

In accordance with an embodiment of the present invention, the optical disc includes one or more dye layers formed over the grooves and lands, a reflective layer formed over the one or more dye layers, and a protective layer formed over the reflective layer. The one or more dye layers may, for example, be made of cyanine, phthalocyanine, azo compounds, formazan, or combinations thereof. The reflective layer may, for example, be made of metals, metallic alloys, metal-containing compounds, or combinations thereof.

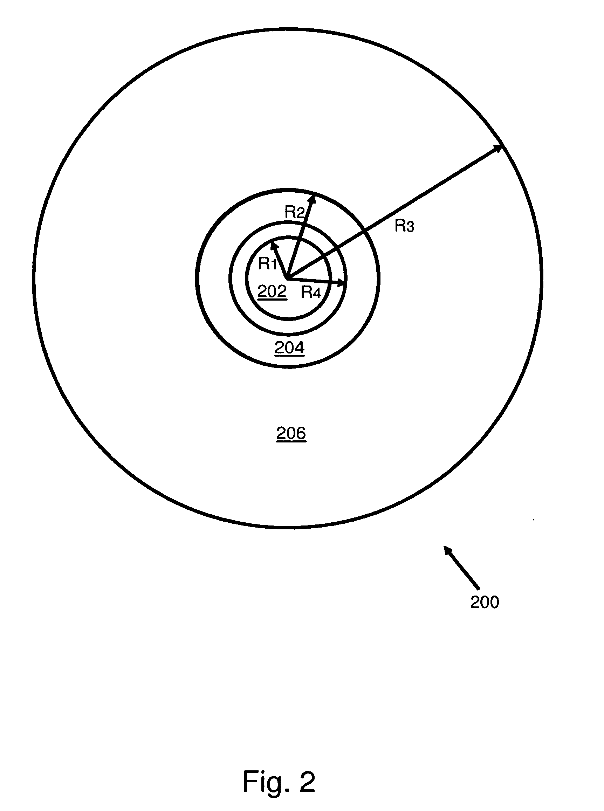

FIG. 2 illustrates an optical disc 200, in accordance with an embodiment of the present invention. Optical disc 200 includes a punch area 202 at a centre of optical disc 200, a hub area 204 surrounding punch area 202, and a data area 206 surrounding hub area 204. Hub area 204 is formed between a first inner radius and a first outer radius, shown as R₁ and R₂ in FIG. 2. Data area 206 is formed between a second inner radius and a second outer radius, shown as R₂ and R₃ in FIG. 2. With reference to FIG. 2, the second inner radius is equal to the first outer radius. The second inner radius is greater than the first inner radius (i.e., R₂ > R₁), and the second outer radius is greater than the first outer radius (i.e., R₃ > R₂).

Hub area 204 and data area 206 include grooves and lands formed between a first predetermined radius, shown as R₄ in FIG. 2, and the second outer radius, R₃. The grooves and lands may be modulated to a predetermined frequency. The first predetermined radius, R₄, lies between the first inner radius, R₁, and the first outer radius, R₂, as shown in FIG. 2. The formation of grooves and lands enables uniform appearance across an area between the first predetermined radius, R₄, and the second outer radius, R₃, as shown in FIG. 2.

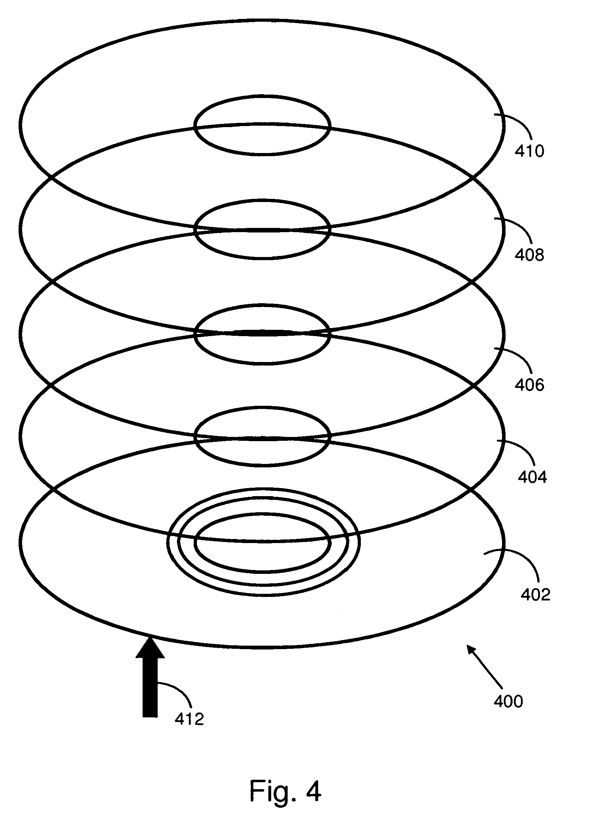

Optical disc 200 includes a printable layer 410 (shown in FIG. 4) formed between the first predetermined radius and the second outer radius, wherein the optical disc has a uniform appearance of an image printed onto printable layer 410 across the area between the first predetermined radius and the second outer radius. Printable layer 410 may, for example, be made of paper, plastic, PVP, PVOH, PVA, polymers, synthetic resins, or combinations thereof.

In accordance with an embodiment of the present invention, optical disc 200 includes one or more dye layers 404 (shown in FIG. 4) formed over the grooves and lands, a reflective layer 406 (shown in FIG. 4) formed over dye layers 404, and a protective layer 408 (shown in FIG. 4) formed over reflective layer 406. A portion of dye layers 404 formed over data area 206, between the second inner radius and the second outer radius, is capable of recording and/or reproducing data. In accordance with a specific embodiment of the present invention, dye layers 404 formed over hub area 204 and data area 206, between the first predetermined radius and the second outer radius, are capable of recording and/or reproducing data, as per new or modified industry standards. Dye layers 404 may, for example, be made of cyanine, phthalocyanine, azo compounds, formazan, or combinations thereof. Reflective layer 406 may, for example, be made of metals, metallic alloys, metal-containing compounds, or combinations thereof. Protective layer 408 protects the underlying layers, and may, for example, be made of an acrylic lacquer.

Optical disc 200 may, for example, be of any suitable type and size. Examples of optical disc 200 include, but are not limited to, CDs, DVDs, HD-DVDs, HVDs, BDs, MDs, UMDs, and LDs. Optical disc 200 may, for example, be recordable, re-writable, read-only memory, or random access memory. The overall radius of optical disc 200 may, for example, range between 30 mm and 65 mm. The first inner radius and the first outer radius may, for example, range between 7.5 mm and 16.5 mm. The second inner radius and the second outer radius may, for example, range between 16.5 mm and 65 mm.

FIG. 2 is merely an example, which should not unduly limit the scope of the claims herein. One of ordinary skill in the art would recognize many variations, alternatives, and modifications of embodiments of the present invention.

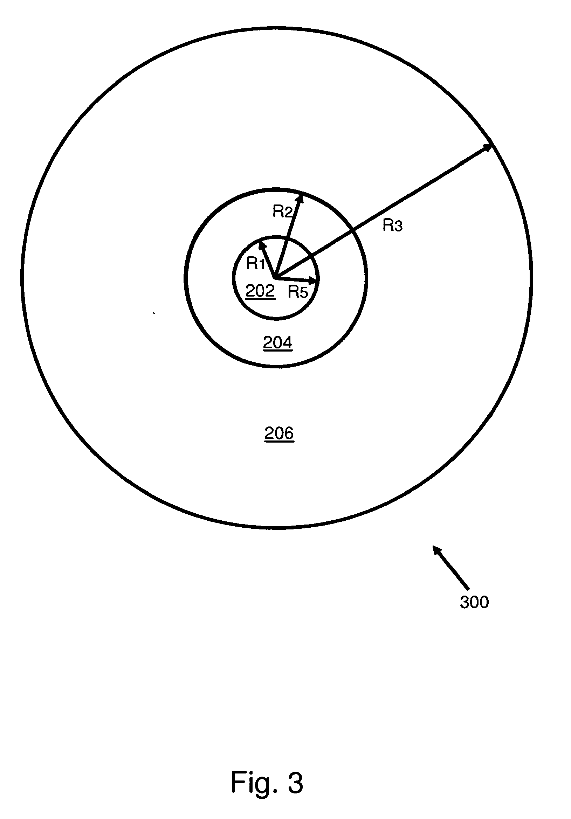

FIG. 3 illustrates an optical disc 300, in accordance with another embodiment of the present invention. Optical disc 300 includes punch area 202, hub area 204, and data area 206. Hub area 204 is formed between the first inner radius, R₁, and the first outer radius, R₂. Data area 206 is formed between the second inner radius, R₂, and the second outer radius, R₃. With reference to FIG. 3, the second inner radius is equal to the first outer radius. The second inner radius is greater than the first inner radius (i.e., R₂ > R₁), and the second outer radius is greater than the first outer radius (i.e., R₃ > R₂).

Hub area 204 and data area 206 include grooves and lands formed between a second predetermined radius, shown as R₅ in FIG. 3, and the second outer radius, R₃. The grooves and lands may be modulated to a predetermined frequency. With reference to FIG. 3, the second predetermined radius, R₅, is equal to the first inner radius, R₁. The formation of grooves and lands enables uniform appearance across hub area 204 and data area 206, as shown in FIG. 3.

Optical disc 300 includes a printable layer 410 (shown in FIG. 4) formed between the second predetermined radius and the second outer radius, wherein the optical disc has a uniform appearance of an image printed onto printable layer 410 across hub area 204 and data area 206. Printable layer 410 may, for example, be made of paper, plastic, PVP, PVOH, PVA, polymers, synthetic resins, or combinations thereof.

In accordance with an embodiment of the present invention, optical disc 300 includes one or more dye layers 404 (shown in FIG. 4) formed over the grooves and lands, a reflective layer 406 (shown in FIG. 4) formed over dye layers 404, and a protective layer 408 (shown in FIG. 4) formed over reflective layer 406. A portion of dye layers 404 formed over data area 206, between the second inner radius and the second outer radius, is capable of recording and/or reproducing data. In accordance with a specific embodiment of the present invention, dye layers 404 formed over hub area 204 and data area 206, between the second predetermined radius and the second outer radius, are capable of recording and/or reproducing data, as per new or modified industry standards. Dye layers 404 may, for example, be made of cyanine, phthalocyanine, azo compounds, formazan, or combinations thereof. Reflective layer 406 may, for example, be made of metals, metallic alloys, metal-containing compounds, or combinations thereof. Protective layer 408 protects the underlying layers, and may, for example, be made of an acrylic lacquer.

Optical disc 300 may, for example, be of any suitable type and size. Examples of optical disc 300 include, but are not limited to, CDs, DVDs, HD-DVDs, HVDs, BDs, MDs, UMDs, and LDs. Optical disc 300 may, for example, be recordable, re-writable, read-only memory, or random access memory. The overall radius of optical disc 300 may, for example, range between 30 mm and 65 mm. The first inner radius and the first outer radius may, for example, range between 7.5 mm and 16.5 mm. The second inner radius and the second outer radius may, for example, range between 16.5 mm and 65 mm.

FIG. 3 is merely an example, which should not unduly limit the scope of the claims herein. One of ordinary skill in the art would recognize many variations, alternatives, and modifications of embodiments of the present invention.

FIG. 4 illustrates various layers of an optical disc 400, in accordance with an embodiment of the present invention. With reference to FIG. 4, optical disc 400 includes a substrate 402 with a groove-containing surface, a dye layer 404 on the groove-containing surface, a reflective layer 406 on dye layer 404, and a protective layer 408 on reflective layer 406. A printable layer 410 is formed over protective layer 408. A printed material may, for example, be printed on printable layer 410.

The groove-containing surface, dye layer 404, reflective layer 406, protective layer 408 and printable layer 410 are located over both a hub area and a data area of optical disc 400. The hub area contains no data and is located surrounding a central punch area in optical disc 400.

The groove-containing surface may include grooves that are modulated to a predetermined frequency, in accordance with an embodiment of the present invention.

The printed material has a uniform appearance across the hub area and the data area of optical disc 400.

An arrow 412 represents the direction of a light beam falling on optical disc 400. The light beam is reflected off reflective layer 406, and is received by a light detector. This enables tracking of the light beam on optical disc 400.

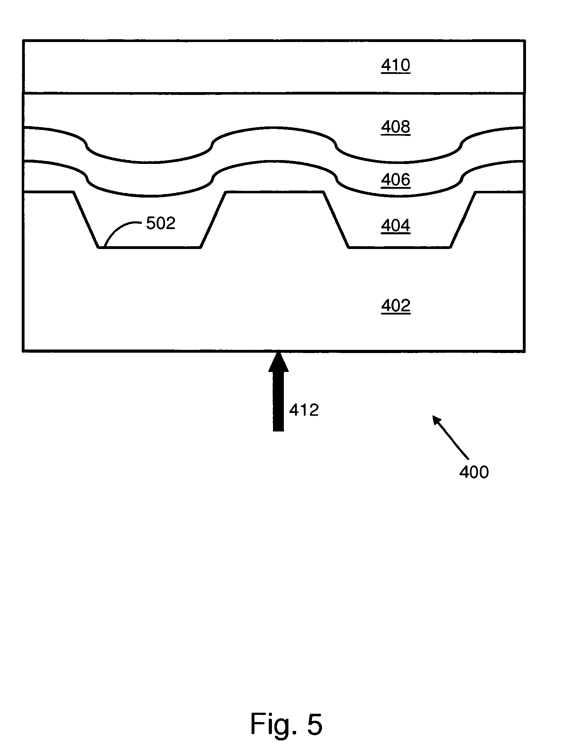

FIG. 5 is a sectional view illustrating the various layers of optical disc 400, in accordance with an embodiment of the present invention. FIG. 5 shows a groove-containing surface 502 of substrate 402. Dye layer 404 is formed on groove-containing surface 502 as shown. Reflective layer 406 is formed on dye layer 404, while protective layer 408 is formed on reflective layer 406. Printable layer 410 is formed over protective layer 408.

FIG. 4 and 5 are merely an example, which should not unduly limit the scope of the claims herein. It is to be understood that the specific designation for optical disc 400 is for the convenience of reading and is not to be construed as limiting optical disc 400 to specific numbers, shapes, sizes, types, or arrangements of various layers of optical disc 400. One of ordinary skill in the art would recognize many variations, alternatives, and modifications of embodiments of the present invention.

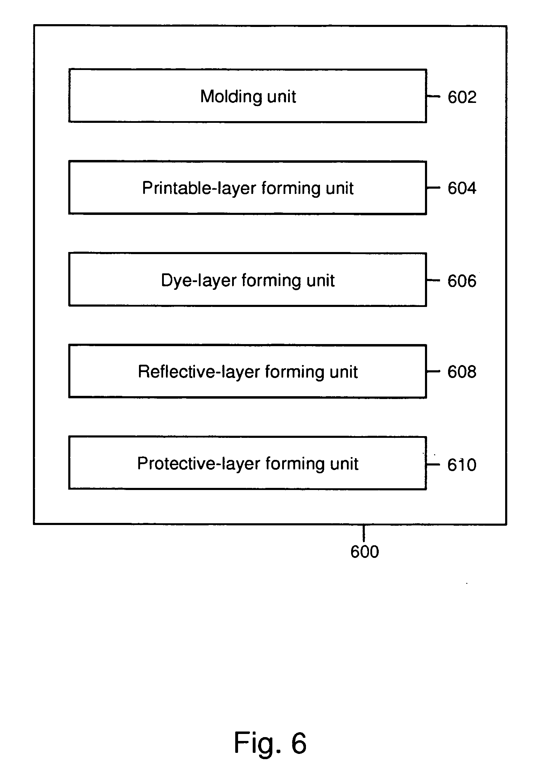

FIG. 6 illustrates a system 600 for manufacturing an optical disc, in accordance with an embodiment of the present invention. System 600 includes a molding unit 602, a printable-layer forming unit 604, a dye-layer forming unit 606, a reflective-layer forming unit 608, and a protective-layer forming unit 610.

Molding unit 602 is adapted to mold a polymeric material to form a substrate. The polymeric material may, for example, be a polycarbonate or a plastic. The substrate so formed includes a hub area and a data area. The hub area is formed between a first inner radius and a first outer radius, while the data area is formed between a second inner radius and a second outer radius. The second inner radius is greater than the first inner radius, and the second outer radius is greater than the first outer radius.

Molding unit 602 is also adapted to form grooves and lands on the substrate between a predetermined radius and the second outer radius, where the predetermined radius lies at the first inner radius or between the first inner radius and the first outer radius.

Molding unit 602 may, for example, be an injection mold adapted to form a substrate with a hub area and a data area, and form grooves and lands, as required. The overall radius of the optical disc to be manufactured may, for example, range between 30 mm and 65 mm. The first inner radius and the first outer radius may, for example, range between 7.5 mm and 16.5 mm. The second inner radius and the second outer radius may, for example, range between 16.5 mm and 65 mm.

Printable-layer forming unit 604 is adapted to form a printable layer on the substrate between the predetermined radius and the second outer radius. This enables uniform appearance of an image printed onto the printable layer across an area between the predetermined radius and the second outer radius. The printable layer may, for example, be made of paper, plastic, PVP, PVOH, PVA, polymers, synthetic resins, or combinations thereof.

Dye-layer forming unit 606 is adapted to form one or more dye layers over the grooves and lands. The number of dye layers may, for example, depend on the type of an optical disc to be manufactured. The one or more dye layers may, for example, be made of an organic dye. Examples of organic dyes include, but are not limited to, cyanine, phthalocyanine, azo compounds, and formazan.

Reflective-layer forming unit 608 is adapted to form a reflective layer over the one or more dye layers. Reflective-layer forming unit 608 may, for example, perform metallization over the one or more dye layers. The reflective layer may, for example, be made of metals, metallic alloys, metal-containing compounds, or combinations thereof.

Protective-layer forming unit 610 is adapted to form a protective layer over the reflective layer. Protective-layer forming unit 610 may, for example, perform spin coating to form the protective layer. The protective layer may, for example, be made of an acrylic lacquer.

FIG. 6 is merely an example, which should not unduly limit the scope of the claims herein. One of ordinary skill in the art would recognize many variations, alternatives, and modifications of embodiments of the present invention. For example, for manufacturing a re-writable optical disc, dye-layer forming unit 606 may be replaced with a sandwiching unit that is adapted to form a sandwich of metals.

Various embodiments of the present invention provide a system for manufacturing an optical disc. The system includes means for molding a polymeric material to form a substrate. As described above, the substrate includes a hub area formed between a first inner radius and a first outer radius, and a data area formed between a second inner radius and a second outer radius. The second inner radius is greater than the first inner radius, and the second outer radius is greater than the first outer radius. The means for molding is adapted to form grooves and lands over the substrate between a predetermined radius and the second outer radius, where the predetermined radius lies at the first inner radius or between the first inner radius and the first outer radius.

The system also includes means for forming a printable layer between the predetermined radius and the second outer radius. This enables uniform appearance of an image printed onto the printable layer across an area between the predetermined radius and the second outer radius.

The system further includes means for forming one or more dye layers over the grooves and lands, means for forming a reflective layer over the one or more dye layers, and means for forming a protective layer over the reflective layer.

An example of the means for molding is, but not limited to, molding unit 602. An example of the means for forming the printable layer is, but not limited to, printable-layer forming unit 604. An example of the means for forming the one or more dye layers is, but not limited to, dye-layer forming unit 606. An example of the means for forming the reflective layer is, but not limited to, reflective-layer forming unit 608. An example of the means for forming the protective layer is, but not limited to, protective-layer forming unit 610.

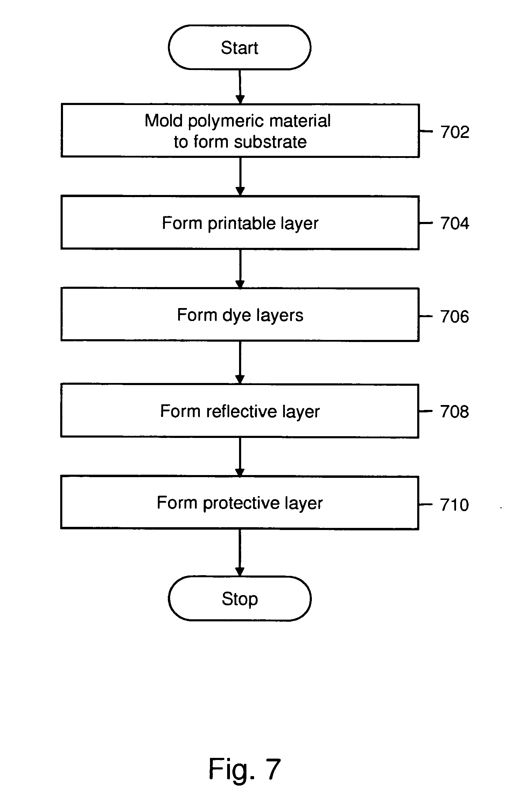

FIG. 7 illustrates a method of manufacturing an optical disc, in accordance with an embodiment of the present invention. The method is illustrated as a collection of steps in a logical flow diagram, which represents a sequence of steps that can be implemented in hardware, software, or a combination thereof.

At step 702, a polymeric material is molded to form a substrate. The substrate so formed includes a hub area and a data area. The hub area is formed between a first inner radius and a first outer radius, while the data area is formed between a second inner radius and a second outer radius. The second inner radius is greater than the first inner radius, and the second outer radius is greater than the first outer radius. Grooves and lands are formed on the substrate between a predetermined radius and the second outer radius, where the predetermined radius lies at the first inner radius or between the first inner radius and the first outer radius.

In accordance with an embodiment of the present invention, step 702 involves injection molding the polymeric material against an injection mold. The polymeric material used at step 702 may, for example, be a polycarbonate or a plastic.

At step 704, a printable layer is formed on the substrate between the predetermined radius and the second outer radius. This enables uniform appearance of an image printed onto the printable layer across an area between the predetermined radius and the second outer radius. The printable layer may, for example, be made of paper, plastic, PVP, PVOH, PVA, polymers, synthetic resins, or combinations thereof.

At step 706, one or more dye layers are formed over the grooves and lands. As mentioned above, the number of dye layers may, for example, depend on the type of an optical disc to be manufactured. The one or more dye layers may, for example, be made of an organic dye. Examples of organic dyes include, but are not limited to, cyanine, phthalocyanine, azo compounds, and formazan.

At step 708, a reflective layer is formed over the one or more dye layers. Step 708 may, for example, involve metallization. The reflective layer may, for example, be made of metals, metallic alloys, metal-containing compounds, or combinations thereof.

At step 710, a protective layer is formed over the reflective layer. Step 710 may, for example, involve spin coating. The protective layer may, for example, be made of an acrylic lacquer. The protective layer protects the underlying layers from damage.

It should be noted here that steps 702-710 are only illustrative and other alternatives can also be provided where steps are added, one or more steps are removed, or one or more steps are provided in a different sequence without departing from the scope of the claims herein. In one example, steps 704 may be performed after steps 706-710. In another example, for manufacturing a re-writable disc, step 706 may be replaced with the step of forming a sandwich of metals.

As described earlier, a region has a uniform appearance when it has substantially the same intensity of whiteness across the region. In accordance with an embodiment of the present invention, the intensity of whiteness is measured in terms of the Lab color space, using a modified form of spectrophotometer. An example of such a spectrophotometer is the Gretag-Macbeth spectroscan.

The intensity of whiteness may be measured with reference to a reference surface, which is considered to be absolute white (i.e., having a value of component 'L' = 100). For example, the relative luminance of a test surface of an optical disc may be calculated by comparing the luminance of the test surface and the reference surface. The intensity of whiteness may then be calculated using the cube root of the relative luminance.

In one implementation, the spectroscan measures the intensity of whiteness at various points on a test surface of an optical disc to be tested. This ensures that the test surface has the same intensity of whiteness across a hub area and a data area of the optical disc. In another implementation, the spectroscan measures the intensity of whiteness at one or more points on a hub area of an optical disc to be tested.

**Table 1 is an exemplary table illustrating values of component 'L' measured across a plurality of optical discs.**

| Optical discs with non-uniform appearance | Optical discs with uniform appearance |
|---|---|
| 82.1361 | 93.2324 |
| 83.7975 | 92.9352 |
| 82.4889 | 93.0396 |
| 83.7537 | 92.9093 |
| 83.3259 | 93.1912 |
| 82.6276 | 92.5427 |
| 83.7001 | 92.7766 |
| 82.3474 | 92.6329 |
| 83.4282 | 94.0206 |
| 82.6082 | 93.4651 |
| 82.8828 | 93.3023 |
| 83.0794 | 93.3608 |
| 82.7887 | 92.9652 |
| 82.0119 | 93.7360 |
| 83.4945 | 92.7625 |
| 83.3195 | 92.6862 |
| 84.1535 | 94.2648 |
| 81.9244 | 92.9507 |
| 83.0992 | 92.9366 |
| 82.9257 | 92.9134 |
| 82.5222 | 93.0791 |
| 82.0416 | 92.5212 |
| 82.5354 | 92.6431 |
| 82.2809 | 93.0864 |
| 82.2346 | 93.6384 |
| 83.5082 | 93.3692 |
| 82.6197 | 93.1760 |
| 82.3552 | 93.2809 |
| 83.0735 | 92.9533 |
| 83.1211 | 93.5576 |
| 82.1665 | 93.4058 |
| 83.6309 | 92.0324 |
| 82.5804 | 92.9886 |
| 82.7567 | 93.8536 |
| 83.4238 | 92.9324 |

| | |
|---|---|
| With reference to Table 1, Column 'Optical discs with non-uniform appearance' denotes values of component 'L' measured at a point on a hub area of 35 optical discs with non-uniform appearance. Column 'Optical discs with uniform appearance' denotes values of component 'L' measured at a point on a hub area of 35 optical discs with uniform appearance. The values of component 'L' have been performed based on the Lab color space. For each optical disc, the point on the hub area has been taken at a radius of 22 mm. | |

It can be observed that values of component 'L' fall in a range of 81 and 85 for hub areas of the optical discs with non-uniform appearance, while values of component 'L' fall in a range of 92 and 95 for hub areas of the optical discs with uniform appearance. Values of component 'L' fall in the same range of 92 and 95 for data areas of the optical discs with uniform appearance. Therefore, such optical discs have a uniform appearance across their hub areas and data areas.

Embodiments of the present invention provide an optical disc with uniform appearance. The optical disc includes a hub area formed between a first inner radius and a first outer radius, and a data area formed between a second inner radius and a second outer radius. The hub area and the data area include grooves and lands formed between a predetermined radius and the second outer radius, where the predetermined radius lies at the first inner radius or between the first inner radius and the first outer radius. This enables uniform appearance across an area between the predetermined radius and the second outer radius.

In addition, the optical disc includes a printable layer formed between the predetermined radius and the second outer radius. This enables uniform appearance of an image printed onto a printable layer of such an optical disc.

Consequently, the utility and acceptability of the optical disc is enhanced. This overcomes various technical hindrances in operational and marketing aspects.

## Claims

1. An optical disc comprising:
a punch area (202) at a centre of the optical disc;
a hub area (204) surrounding the punch area (202), the hub area (204) formed between a first inner radius (R₁) and a first outer radius, (R₂) the hub area contains no data; and
a data area (206) surrounding the hub area (204), the data area (206) formed between a second inner radius (R₂) and a second outer radius (R₃), wherein the second inner radius is greater than the first inner radius and the second outer radius is greater than the first outer radius and the second inner radius is equal to the first outer radius,
**characterized in that**
the hub area (204) and the data area (206) comprise grooves and lands formed between a predetermined radius and the second outer radius, the predetermined radius lies at the first inner radius (R₁) or between the first inner radius (R₁) and the first outer radius (R₂), wherein a printable layer (410) is provided in an area covered between the predetermined radius and the second outer radius (R₃), further wherein, the optical disc has a uniform intensity of whiteness, i.e. a uniform 'L' value ranging from 92 to 95 across the printable layer (410), measured relative to a reference surface of absolute white, i.e 'L' = 100.

2. The optical disc of claim 1, wherein the optical disc has a uniform appearance of an image printed onto the printable layer (410) across the area between the predetermined radius and the second outer radius.

3. The optical disc of claim 2, wherein the printable layer (410) is made of at least one material selected from the group consisting of paper, plastic, polyvinyl pyrrolidone (PVP), polyvinyl alcohol (PVOH), polyvinyl acetate (PVA), polymers and synthetic resins.

4. The optical disc of claim 1 further comprising:
one or more dye layers (404) formed over the grooves and lands;
a reflective layer (406) formed over the one or more dye layers (404); and
a protective layer (408) formed over the reflective layer (406).

5. The optical disc of claim 4, wherein the one or more dye layers (404) are made of at least one dye selected from the group consisting of cyanine, phthalocyanine, azo compounds, and formazan.

6. The optical disc of claim 4, wherein the reflective layer (406) is made of at least one reflective material selected from the group consisting of metals, metallic alloys, and metal compounds.

7. The optical disc of claim 1, wherein the first inner radis (R₁) and the first outer radius (R₂) range between 7.5 mm and 16.5 mm, and the second inner radius (R₂) and the second outer radius (R₃) range between 16.5 mm and 65 mm.

8. A method of manufacturing an optical disc, the method comprising:
molding a polymeric material to form a substrate, the substrate comprising a hub area (204) formed between a first inner radius (R₁) and a first outer radius (R₂) wherein the hub area contains no data, and a data area (206) formed between a second inner radius (R₂) and a second outer radis (R₃), wherein the second inner radius is greater than the first inner radius and the second outer radius is greater than the first outer radius, and the second inner radius (R₂) is equal to the first outer radius (R₂), **characterized in that**
the substrate comprises grooves and lands formed between a predetermined radius and the second outer radius, the predetermined radius lies at the first inner radius or between the first inner radius and the first outer radius; and
forming a printable layer (410) between the predetermined radius and the second outer radius (R₃), wherein the optical disc has a uniform appearance of an image printed onto the printable layer (410) across an area between the redetermined radius and the second outer radius (R₃) further wherein the optical disc has a uniform intensity of whiteness, i.e. a uniform 'L' value ranging from 92 to 95 across the printable layer (410), measured relative to a reference surface of absolute white, i.e. 'L'=100.

9. The method of claim 8, wherein the molding comprises injection molding.

10. The method of claim 8, wherein the printable layer (410) is made of at least one material selected from the group consisting of paper, plastic, polyvinyl pyrrolidone (PVP), polyvinyl alcohol (PVOH), polyvinyl acetate (PVA), polymers and synthetic resins.

11. The method of claim 8 further comprising:
forming one or more dye layers (404) over the grooves and lands;
forming a reflective layer (406) over the one or more dye layers (404); and
forming a protective layer (408) over the reflective layer (406).

12. The method of claim 11, wherein the one or more dye layers (404) are made of at least one dye selected from the group consisting of cyanine, phthalocyanine, azo compounds, and formazan.

13. The method of claim 11, wherein the reflective layer (406) is made of at least one reflective material selected from the group consisting of metals, metallic alloys, and metal compounds.

14. The method of claim 8, wherein the first inner radius (R₁) and the first outer radius (R₂) range between 7.5 mm and 16.5 mm, and the second inner radius (R₂) and the second outer radius (R₃) range between 16.5 mm and 65 mm.

## Patentansprüche

1. Optische Scheibe, umfassend:
einen ausgestanzten Bereich (202) in einer Mitte der optischen Scheibe;
einen Nabenbereich (204), der den ausgestanzten Bereich (202) umgibt und zwischen einem ersten inneren Radius (R₁) und einem ersten äußeren Radius (R₂) ausgebildet ist und keine Daten enthält; und
einen Datenbereich (206), der den Nabenbereich (204) umgibt und zwischen einem zweiten inneren Radius (R₂) und einem zweiten äußeren Radius (R₃) ausgebildet ist, wobei der zweite innere Radius größer als der erste innere Radius ist und der zweite äußere Radius größer als der erste äußere Radius ist und der zweite innere Radius gleich dem ersten äußeren Radius ist,
**dadurch gekennzeichnet, dass**
der Nabenbereich (204) und der Datenbereich (206) Rillen und Stege umfassen, die zwischen einem vorgegebenen Radius und dem zweiten äußeren Radius ausgebildet sind, und der vorgegebene Radius an dem ersten inneren Radius (R₁) oder zwischen dem ersten inneren Radius (R₁) und dem ersten äußeren Radius (R₂) liegt, wobei auf einer Fläche zwischen dem vorgegebenen Radius und dem zweiten äußeren Radius (R₃) eine bedruckbare Schicht (410) bereitgestellt ist, und wobei die optische Scheibe ferner eine gleichmäßige Weiße-Intensität aufweist, d.h. einen gleichmäßigen "L-Wert" im Bereich von 92 bis 95 auf der bedruckbaren Schicht (410), gemessen in Relation zu einer Referenzfläche mit absolutem Weiß, d. h. "L" = 100.

2. Optische Scheibe nach Anspruch 1, wobei die optische Scheibe ein gleichmäßiges Aussehen eines Bildes aufweist, das auf die Fläche zwischen dem vorgegebenen Radius und dem zweiten äußeren Radius auf die bedruckbare Schicht (410) gedruckt ist.

3. Optische Scheibe nach Anspruch 1, wobei die bedruckbare Schicht (410) aus mindestens einem Material hergestellt ist, das aus der Gruppe bestehend aus Papier, Kunststoff, Polyvinylpyrrolidon (PVP), Polyvinylalkohol (PVOH), Polyvinylacetat (PVA), Polymeren und synthetischen Kunstharzen gewählt ist.

4. Optische Scheibe nach Anspruch 1, weiterhin umfassend:
eine Farbstoffschicht oder mehrere Farbstoffschichten (404), die über die Rillen und Stege ausgebildet ist bzw. sind;
eine reflektierende Schicht (406), die über der einen oder den mehreren Farbstoffschichten (404) ausgebildet ist; und
eine Schutzschicht (408), die über der reflektierenden Schicht (406) ausgebildet ist.

5. Optische Scheibe nach Anspruch 4, wobei die eine oder mehrere Farbstoffschicht(en) (404) aus mindestens einem Farbstoff hergestellt ist, der aus der Gruppe bestehend aus Zyanin, Phthalocyanin, Azoverbindungen und Formazan gewählt ist.

6. Optische Scheibe nach Anspruch 4, wobei die reflektierende Schicht (406) aus mindestens einem reflektierenden Material hergestellt ist, das aus der Gruppe bestehend aus Metall, Metalllegierungen und Metallverbindungen gewählt ist.

7. Optische Scheibe nach Anspruch 1, wobei der erste innere Radius (R₁) und der erste äußere Radius (R₂) in einem Bereich zwischen 7,5 mm und 16,5 mm liegen, und der zweite innere Radius (R₂) und der zweite äußere Radius (R₃) in einem Bereich zwischen 16,5 mm und 65 mm liegen.

8. Verfahren zum Herstellen einer optischen Scheibe, umfassend:
Formen eines Polymermaterials zu einem Substrat, das einen Nabenbereich (204) zwischen einem ersten inneren Radius (R₁) und einem ersten äußeren Radius (R₂) umfasst, wobei der Nabenbereich keine Daten enthält, und einen Datenbereich (206) zwischen einem zweiten inneren Radius (R₂) und einem zweiten äußeren Radius (R₃), wobei der zweite innere Radius größer als der erste innere Radius ist und der zweite äußere Radius größer als der erste äußere Radius ist und der zweite innere Radius (R₂) gleich dem ersten äußeren Radius (R₂) ist,
**dadurch gekennzeichnet, dass**
das Substrat Rillen und Stege umfasst, die zwischen einem vorgegebenen Radius und dem zweiten äußeren Radius ausgebildet sind, wobei der vorgegebene Radius an dem ersten inneren Radius oder zwischen dem ersten inneren Radius und dem ersten äußeren Radius liegt; und
Bilden einer bedruckbaren Schicht (410) zwischen dem vorgegebenen Radius und dem zweiten äußeren Radius (R₃), wobei die optische Scheibe ein gleichmäßiges Aussehen eines Bildes aufweist, das auf die Fläche zwischen dem vorgegebenen Radius und dem zweiten äußeren Radius (R₃) auf die bedruckbare Schicht (410) gedruckt ist, und wobei die optische Scheibe ferner eine gleichmäßige Weiße-Intensität aufweist, d.h. einen gleichmäßigen "L-Wert" im Bereich von 92 bis 95 auf der bedruckbaren Schicht (410), gemessen in Relation zu einer Referenzfläche mit absolutem Weiß, d.h. "L" = 100.

9. Verfahren nach Anspruch 8, wobei das Formen Spritzgießen umfasst.

10. Verfahren nach Anspruch 8, wobei die bedruckbare Schicht (410) aus mindestens einem Material hergestellt wird, das aus der Gruppe bestehend aus Papier, Kunststoff, Polyvinylpyrrolidon (PVP), Polyvinylalkohol (PVOH), Polyvinylacetat (PVA), Polymeren und synthetischen Kunstharzen gewählt wird.

11. Verfahren nach Anspruch 8, das weiterhin umfasst:
Bilden von einer oder mehreren Farbstoffschicht(en) (404) über den Rillen und Stegen;
Bilden einer reflektierenden Schicht (406) über der einen oder den mehreren Farbstoffschichten (404); und
Bilden einer Schutzschicht (408) über der reflektierenden Schicht (406).

12. Verfahren nach Anspruch 11, wobei die eine oder mehrere Farbstoffschicht(en) (404) aus mindestens einem Farbstoff hergestellt wird bzw. werden, der aus der Gruppe bestehend aus Zyanin, Phthalocyanin, Azoverbindungen und Formazan gewählt wird.

13. Verfahren nach Anspruch 11, wobei die reflektierende Schicht (406) aus mindestens einem reflektierenden Material hergestellt wird, das aus der Gruppe bestehend aus Metall, Metalllegierungen und Metallverbindungen gewählt wird.

14. Verfahren nach Anspruch 8, wobei der erste innere Radius (R₁) und der erste äußere Radius (R₂) in einem Bereich zwischen 7,5 mm und 16,5 mm liegen, und der zweite innere Radius (R₂) und der zweite äußere Radius (R₃) in einem Bereich zwischen 16,5 mm und 65 mm liegen.

## Revendications

1. Disque optique comprenant :
une zone perforée (202) à un centre du disque optique ;
une zone de moyeu (204) entourant la zone perforée (202), la zone de moyeu (204) étant formée entre un premier rayon intérieur (R1) et un premier rayon extérieur (R2), la zone de moyeu ne contenant pas de données et
une zone de données (206) entourant la zone de moyeu (204), la zone de données (206) formée entre un second rayon intérieur (R2) et un second rayon extérieur (R3), le second rayon intérieur étant plus grand que le premier rayon intérieur et le second rayon extérieur étant plus grand que le premier rayon extérieur et le second rayon intérieur étant égal au premier rayon extérieur,
**caractérisé en ce**
**que** la zone de moyeu (204) et la zone de données (206) comprennent des rayures et des filets de rayures formés entre un rayon prédéfini et le second rayon extérieur, le rayon prédéfini se situe au premier rayon intérieur (R1) ou entre le premier rayon intérieur (R1) et le premier rayon extérieur (R2), une couche imprimable (410) étant prévue dans une zone couverte entre le rayon prédéfini et le second rayon extérieur (R3), dans lequel de plus le disque optique a une intensité uniforme de blanchisseurs, c'est-à-dire une valeur "L" uniforme de l'ordre de 92 à 95 sur la couche imprimable (410) mesurée par rapport à une surface de référence de blanc absolu, c'est-à-dire "L" = 100.

2. Disque optique selon la revendication 1 dans lequel le disque optique a une apparence uniforme d'une image imprimée sur la couche imprimable (410) sur la zone entre le rayon prédéfini et le second rayon extérieur.

3. Disque optique selon la revendication 2 dans lequel la couche imprimable (410) est faite d'au moins un matériau sélectionné dans le groupe comportant le papier, le plastique, la polyvinylpyrrolidone (PVP), l'alcool de polyvinyle (PVOH), l'acétate de polyvinyle (PVA), les polymères et les résines synthétiques.

4. Disque optique selon la revendication 1 comprenant de plus :
une ou plusieurs couches de colorant (404) formées sur les rayures et filets de rayures (404) et
une couche réfléchissante (406) formée sur la ou les couches de colorant (404) et
une couche de protection (408) formée sur la couche réfléchissante (406).

5. Disque optique selon la revendication 4 dans lequel la ou les couches de colorant (404) sont faites en au moins un colorant sélectionné dans le groupe comprenant la cyanine, la phthalocyanine, les composés diazoïques et le formazan.

6. Disque optique selon la revendication 4 dans lequel la couche réfléchissante (406) est faite en au moins un matériau réfléchissant sélectionné dans le groupe comprenant les métaux, les alliages métalliques et les composés de métal.

7. Disque optique selon la revendication 1 dans lequel le premier rayon intérieur (R1) et le premier rayon extérieur (R2) sont situés dans une plage de 7,5 mm à 16,5 mm et le second rayon intérieur (R2) et le second rayon extérieur (R3) sont situés dans une plage de 16,5 mm à 65 mm.

8. Procédé de fabrication d'un disque optique, le procédé comprenant :
le moulage d'un matériau contenant des polymères pour former un substrat, le substrat comprenant une zone de moyeu (204) formée entre un premier rayon intérieur (R1) et un premier rayon extérieur (R2), la zone de moyeu ne contenant pas de données, et une zone de données (206) formée entre un second rayon intérieur (R2) et un second rayon extérieur (R3), le second rayon intérieur étant plus grand que le premier rayon intérieur et le second rayon extérieur (R3) étant plus grand que le premier rayon extérieur et le second rayon intérieur (R2) étant égal au premier rayon extérieur (R2),
**caractérisé en ce**
**que** le substrat comprend des rayures et des filets de rayures formés entre un rayon prédéfini et le second rayon extérieur, le rayon prédéfini se situe au premier rayon intérieur ou entre le premier rayon intérieur et le premier rayon extérieur et
la formation d'une couche imprimable (410) entre le rayon prédéfini et le second rayon extérieur (R3), le disque optique ayant une apparence uniforme d'une image imprimée sur la couche imprimable (410) sur la zone entre le rayon prédéfini et le second rayon extérieur (R3), de plus le disque optique ayant une intensité uniforme de blanchisseurs, c'est-à-dire une valeur "L" uniforme de l'ordre de 92 à 95 sur la couche imprimable (410) mesurée par rapport à une surface de référence de blanc absolu, c'est-à-dire "L" = 100.

9. Procédé selon la revendication 8 dans lequel le moulage comprend le moulage par injection.

10. Procédé selon la revendication 8 dans lequel la couche imprimable (410) est faite d'au moins un matériau sélectionné dans le groupe comportant le papier, le plastique, la polyvinylpyrrolidone (PVP), l'alcool de polyvinyle (PVOH), l'acétate de polyvinyle (PVA), les polymères et les résines synthétiques.

11. Procédé selon la revendication 8 comprenant :
la formation d'une ou de plusieurs couches de colorant (404) sur les rayures et filets de rayures (404),
la formation d'une couche réfléchissante (406) sur la ou les couches de colorant (404) et
la formation d'une couche de protection (408) sur la couche réfléchissante (406).

12. Procédé selon la revendication 11 dans lequel la ou les couches de colorant (404) sont faites en au moins un colorant sélectionné dans le groupe comprenant la cyanine, la phthalocyanine, les composés diazoïques et le formazan.

13. Procédé selon la revendication 11 dans lequel la couche réfléchissante (406) est faite en au moins un matériau réfléchissant sélectionné dans le groupe comprenant les métaux, les alliages métalliques et les composés de métal.

14. Procédé selon la revendication 8 dans lequel le premier rayon intérieur (R1) et le premier rayon extérieur (R2) sont situés dans une plage de 7,5 mm à 16,5 mm et le second rayon intérieur (R2) et le second rayon extérieur (R3) sont situés dans une plage de 16,5 mm à 65 mm.
